(19) Europäisches Patentamt
European Patent Office
Office européen des brevets

(11) **EP 3 114 428 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(51) Int Cl.:
***G01P 15/00*** (2006.01)   ***G01B 17/00*** (2006.01)
***G01B 7/004*** (2006.01)   ***G01B 5/004*** (2006.01)

(21) Anmeldenummer: **15712809.1**

(22) Anmeldetag: **04.03.2015**

(86) Internationale Anmeldenummer:
**PCT/EP2015/054547**

(87) Internationale Veröffentlichungsnummer:
**WO 2015/132311 (11.09.2015 Gazette 2015/36)**

(54) **ERKENNUNG DES AUFTREFFPUNKTES**

RECOGNITION OF AN IMPACT POINT

DÉTECTION DU POINT D'IMPACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2014 DE 102014003354**

(43) Veröffentlichungstag der Anmeldung:
**11.01.2017 Patentblatt 2017/02**

(73) Patentinhaber: **Head Technology GmbH 6921 Kennelbach (AT)**

(72) Erfinder: **MOHR, Stefan A-6850 Dornbirn (AT)**

(74) Vertreter: **Vossius & Partner Patentanwälte Rechtsanwälte mbB Siebertstrasse 3 81675 München (DE)**

(56) Entgegenhaltungen:
**WO-A1-2013/069447   US-A- 5 757 266**
**US-A1- 2005 239 583   US-A1- 2007 105 664**
**US-A1- 2013 053 190**

EP 3 114 428 B1

**Beschreibung**

Die vorliegende Erfindung betrifft ein Verfahren zur Bestimmung einer ersten und zweiten Koordinate des Auftreffpunktes eines Objekts auf der Oberfläche eines Gegenstands.

In den unterschiedlichsten technischen Gebieten kann es von größtem Interesse sein, den Auftreff- oder Kontaktpunkt eines sich bewegenden Objektes auf der Oberfläche eines ruhenden oder sich ebenfalls bewegenden Gegenstands oder Körpers möglichst präzise zu bestimmen. Beispielsweise kann ein Flugzeug beim Start oder während der Landung mit einem Objekt wie zum Beispiel einem Vogel oder einem aufgewirbelten Stück Abfall oder dergleichen kollidieren. In einem solchen Fall muss in der Regel die Oberfläche des Flugzeugs oder zumindest der Flügel gründlich nach potentiellen Schädigungen abgesucht werden. Hierbei wäre es hilfreich, den Auftreffpunkt des Objekt möglichst präzise automatisch bestimmen zu können, so dass lediglich ein kleiner Bereich von Hand untersucht werden muss. Ähnliche Probleme stellen sich bei der Kollision von Vögeln mit den Flügeln von Windrädern, von Weltraumschrott mit den Paneelen von Satelliten, von Eisbergen oder Treibgut mit Schiffsrümpfen, von Steinen (Steinschlag) mit PKWs, LKWs oder Fahrrädern und anderen vergleichbaren Situationen.

Auch im Bereich des Ballspielsports stellt sich dieses Problem, wenn auch aus anderen Gründen: Es ist schon lange bekannt, dass der Auftreffpunkt eines Balles auf der Bespannung eines Ballspielschlägers einen ganz entscheidenden Einfluss auf die Leistung und Effizienz eines Spielers hat. Wird der sogenannte "sweet spot" des Schlägers getroffen, so ist sowohl die Kraftübertragung vom Schläger bzw. von dessen Bespannung auf den Ball als auch die Kontrolle der Flugrichtung des Balles optimal. Es wurde daher bereits vor einiger Zeit versucht, Trainingsschläger bereitzustellen, mit deren Hilfe sich bestimmen oder überwachen lässt, ob der Ball diesen sweet spot getroffen hat. So beschreibt beispielsweise die DE 198 16 389 A1 einen Tennisschläger zum Trainieren der Treffgenauigkeit und zum Verbessern der Schlageffizienz, in dessen Bespannung ein Sensor integriert ist. Dieser Sensor gibt dann und nur dann ein Signal ab, wenn er vom Ball getroffen wird. Schlägt der Ball neben dem Sensor auf, wird kein Signal erzeugt. Auch die DE 29 425 33 A1 beschreibt einen Tennisschläger mit einem Treff-Signalgeber, durch den im Falle des Treffens des Tennisballs auf einen Zentralbereich der Bespannung ein Treffsignal erzeugt wird. Diese Tennisschläger haben jedoch den Nachteil, dass der Spieler lediglich ein qualitatives Signal (sweet spot getroffen oder sweet spot nicht getroffen) erhält, ohne jedoch Informationen zum tatsächlichen Auftreffpunkt des Balls auf der Bespannung zu bekommen. Die US 4,101,132 und US 4,257,594 stellen insofern einen verbesserten Tennisschläger bereit, als in diesem mehrere Zonen definiert sein können und mit Hilfe mehrerer Sensoren bestimmt werden kann, welche dieser Zonen vom Ball getroffen wurde. Auch diese Art Tennisschläger generiert jedoch lediglich ein diskretes Signal. Zudem wird dieser Tennisschläger mit zunehmender Anzahl von Zonen aufgrund der Vielzahl von notwendigen Sensoren technisch komplex und daher entsprechend teuer. Schließlich beschreibt die EP 0 377 614 B1 einen Tennisschläger mit einer Mehrzahl von Sensoreinrichtungen, die am Umfang der Bespannung angeordnet sind, um sich entlang der Bespannung ausbreitende Schockwellen zu detektieren, die verursacht werden, wenn der Ball die Bespannung trifft. Es werden dann jeweilige Zeitpunkte unterschieden, zu denen die Schockwellenschwingungen anfänglich von den jeweiligen Sensoreinrichtungen detektiert werden. Wenn die so ermittelten jeweiligen Zeitpunkte in einen vorbestimmten Referenzzeitrahmen fallen, der dem sweet spot entspricht, so wird signalisiert, dass der Tennisschläger im sweet spot getroffen worden ist. Wie man sich jedoch leicht klarmacht, erfordert ein solcher Tennisschläger eine extrem hohe Zeitauflösung, wenn der Auftreffpunkt des Balls zentimetergenau bestimmt werden soll. Entsprechend ist die notwendige Sensorik technisch hoch anspruchsvoll und daher teuer. WO 2013/069447 A1, US 2005/239583 A1, US 2007/105664 A1, US 2013/053190 A1 und US 5 757 266 A offenbaren jeweils ein Verfahren zur Bestimmung der Lage eines Objektes auf der Oberfläche eines Gegenstandes.

Ausgehend von den spezifischen Lösungen, die aus dem Stand der Technik für den Ballspielsport bereits bekannt sind, stellt sich die vorliegende Erfindung die Aufgabe, ganz allgemein ein verbessertes Verfahren zur Bestimmung einer ersten und zweiten Koordinate des Auftreffpunkts eines Objekts auf der Oberfläche eines Gegenstands oder Körpers bereitzustellen, das den oben diskutierten Nachteilen der aus dem Stand der Technik bekannten Verfahren Rechnung trägt. Diese Aufgabe wird mit einem Verfahren gemäß dem Anspruch 1 gelöst. Bevorzugte Ausführungsformen der vorliegenden Erfindung sind in den abhängigen Ansprüchen beschrieben.

Die vorliegende Erfindung betrifft ein Verfahren zur Bestimmung einer ersten und zweiten Koordinate des Auftreffpunkts eines bevorzugt beweglichen Objekts auf der Oberfläche eines ruhenden oder sich ebenfalls bewegenden Gegenstands oder Körpers. Bei dem Gegenstand oder Körper kann es sich grundsätzlich um jeden beliebigen Gegenstand oder Körper handeln. Bevorzugt handelt es sich dabei um einen ausgedehnten bzw. länglichen Gegenstand. Bevorzugte Beispiele für solche Gegenstände oder Körper sind: Flugzeuge, Flugzeugflügel, Helikopterflügel, Flügel von Windrädern, Satelliten, Schiffsrümpfe, Schiffsschrauben, PKWs, LKWs, Fahrräder, Teleskope, Solarzellen, Ballspielschläger, etc. Bei dem Objekt kann es sich grundsätzlich um jedes beliebige Objekt handeln. Bevorzugt ist das Objekt relativ klein im Vergleich zum Gegenstand oder Körper. Bevorzugt beträgt die maximale Ausdehnung des Objekts höchstens 15%, besonders bevorzugt höchstens 10% der maximalen Ausdehnung des Gegenstands oder Körpers. Bevorzugte Beispiele für solche Objekte sind: Vögel, Insekten, Käfer, Treibgut wie z.B. Treibholz, Eisberge, Steine, Hagelkörner, Bälle, Weltraumschrottpartikel, etc.

Die Längsachse des Gegenstands definiert eine x-Koordinate, die Querachse entlang der Breite des Gegenstands definiert eine y-Koordinate und die Senkrechte zur x- und y-Koordinate entlang der Höhe des Gegenstands definiert eine z-Koordinate.

Gemäß der vorliegenden Erfindung wird eine erste kinematische Grundgröße entlang einer ersten Richtung als Funktion der Zeit an einem ersten Punkt des Gegenstands gemessen und eine zweite kinematische Grundgröße entlang einer zweiten Richtung als Funktion der Zeit an einem zweiten Punkt des Gegenstands gemessen. Bevorzugt beträgt die Messrate bei der Messung der ersten und/oder zweiten kinematischen Grundgröße mindestens 50 Hz. Die gemessene erste kinematische Grundgröße und die gemessene zweite kinematische Grundgröße werden in den Frequenzraum transformiert. Alternativ oder zusätzlich kann auch eine Linearkombination aus der gemessenen ersten kinematische Grundgröße und der gemessenen zweiten kinematischen Grundgröße in den Frequenzraum transformiert werden.

Auf Basis der transformierten kinematischen Grundgröße(n) im Frequenzraum wird dann die erste und/oder zweite Koordinate des Auftreffpunkts ermittelt.

Die Transformation in den Frequenzraum kann mithilfe bekannter Techniken wie zum Beispiel der DFT, bevorzugt der FFT erfolgen. Bei der kinematischen Grundgröße kann es sich um die Geschwindigkeit, die Beschleunigung oder eine andere kinematische Grundgröße handeln. Die Messung erfolgt bevorzugt mit einem Beschleunigungssensor und/oder einem Gyrometer. Anstelle der tatsächlich gemessenen kinematischen Grundgröße kann auch eine daraus abgeleitete Größe transformiert werden. So kann beispielsweise die Geschwindigkeit gemessen werden, daraus die Beschleunigung abgeleitet werden und dann die Beschleunigung in den Frequenzraum transformiert werden und vice versa. Mit der ersten und zweiten Koordinate des Auftreffpunktes sind Koordinaten innerhalb der Ebene der Oberfläche des Gegenstands oder Körpers gemeint. Bevorzugt stehen die erste und zweite Koordinate senkrecht aufeinander. Besonders bevorzugt orientieren sich die erste und zweite Koordinate an der x- bzw. y-Koordinate.

Bevorzugt ist die erste Richtung im Wesentlichen mit der zweiten Richtung identisch. Dabei sind die erste und zweite Richtung besonders bevorzugt im Wesentlichen parallel zur z-Koordinate. Mit anderen Worten wird bevorzugt die Geschwindigkeit oder Beschleunigung senkrecht zur Länge und Breite des Gegenstands gemessen. Bevorzugt handelt es sich um einen näherungsweise flächigen Gegenstand wie z.B. einen Flugzeug- oder Windradflügel. Die erste und zweite Richtung ist dann bevorzugt senkrecht zu dieser Fläche orientiert.

Der erste Punkt des Gegenstands kann mit dem zweiten Punkt des Gegenstands identisch sein. So kann beispielsweise die erste kinematische Grundgröße und die zweite kinematische Grundgröße mit ein und demselben Sensor gemessen werden. Bevorzugt unterscheidet sich jedoch der erste Punkt von dem zweiten Punkt. Besonders bevorzugt ist dabei mindestens einer der beiden Punkte in Bezug auf die Längsachse des Gegenstands nach außen versetzt.

Bevorzugt weist das Ermitteln der ersten und/oder zweiten Koordinate des Auftreffpunkts auf der Basis der transformierten kinematischen Grundgröße(n) im Frequenzraum die folgenden Schritte auf: Bestimmen eines charakteristischen Frequenzintervalls, Bestimmen mindestens eines charakteristischen Wertes der ersten und/oder zweiten kinematischen Grundgröße in Bezug auf das charakteristische Frequenzintervall, und Ermitteln der ersten und/oder zweiten Koordinate des Auftreffpunkts auf der Basis des mindestens einen charakteristischen Wertes. Das charakteristische Frequenzintervall wird dabei bevorzugt vorab bestimmt bzw. festgelegt und hängt unter anderem von den Schwingungseigenschaften des Gegenstands oder Körpers und der Art und Größe des auftreffenden Objekts ab. Dabei liegt die Untergrenze des charakteristischen Frequenzintervalls bevorzugt zwischen 0 Hz und 100 Hz, stärker bevorzugt zwischen 5 Hz und 80 Hz und besonders bevorzugt zwischen 10 Hz und 50 Hz. Die Obergrenze des charakteristischen Frequenzintervalls liegt bevorzugt zwischen 20 Hz und 500 Hz, stärker bevorzugt zwischen 25 Hz und 400 Hz und besonders bevorzugt zwischen 30 Hz und 300 Hz. Gemäß dieser bevorzugten Ausführungsform des erfindungsgemäßen Verfahrens erfolgt die Bestimmung des Auftreffpunkts auf der Basis von relativ kleinen Frequenzen. Dementsprechend bedarf es für das erfindungsgemäße Verfahren keiner zeitlich hochaufgelösten Messung der kinematischen Grundgrößen. Das ermöglicht die Verwendung relativ einfacher Standardsensoren, die entsprechend günstig sind.

Bei dem charakteristischen Wert kann es sich bevorzugt um einen oder eine Kombination der folgenden Werte handeln: lokales oder absolutes Minimum der ersten und/oder zweiten kinematischen Grundgröße im charakteristischen Frequenzintervall, lokales oder absolutes Maximum der ersten und/oder zweiten kinematischen Grundgröße im charakteristischen Frequenzintervall, Mittelwert der ersten und/oder zweiten kinematischen Grundgröße im charakteristischen Frequenzintervall, Mittelwert der ersten und/oder zweiten kinematischen Grundgröße in einem Teilintervall des charakteristischen Frequenzintervalls. Erfindungsgemäß hat sich herausgestellt, dass der Auftreffpunkt des Objekts auf der Oberfläche des Gegenstands eine charakteristische Signatur im Frequenzraum der jeweiligen kinematischen Grundgröße hinterlässt. Da sich diese Signatur unterschiedlich auswirken kann, ist die vorliegende Erfindung nicht auf bestimmte charakteristische Werte limitiert.

Vielmehr lassen sich je nach Anordnung der Sensoren und Schwingungseigenschaften des Gegenstands unterschiedliche charakteristische Werte definieren, die direkt mit dem Auftreffpunkt des Objekts korreliert sind. Im Wesentlichen beruht die vorliegende Erfindung unter anderem auf dem Grundgedanken, dass das Frequenzspektrum auf unterschiedliche, aber bestimmte Weise mit dem Auftreffpunkt des Objekts auf der Oberfläche des Gegenstands korreliert. Diese Korrelation lässt sich für jeden Gegenstand durch entsprechende Experimente finden. Ist eine solche Korrelation einmal bekannt, lässt sich durch Analyse des Spektrums im Frequenzraum bzw. durch Bestimmen eines bestimmten charakteristischen Wertes der kinematischen Grundgröße im Frequenzraum die erste und/oder zweite Koordinate des Auftreffpunkts ermitteln. Dies kann beispielsweise mithilfe einer Tabelle erfolgen, die bestimmten charakteristischen Werten jeweils einen bestimmten Objektauftreffpunkt zuordnet. Bevorzugt ist jedoch die erste und/oder zweite Koordinate eine Funktion eines oder mehrere charakteristischer Werte.

Gemäß einer bevorzugten Ausführungsform ist die erste Koordinate die x-Koordinate, die erste Richtung im Wesentlichen parallel zur z-Koordinate und der erste Punkt in der Nähe von oder an einem längsseitigen Ende des Gegenstands vorgesehen. Gemäß einer weiteren bevorzugten Ausführungsform ist die erste Koordinate die x-Koordinate, die zweite Koordinate die y-Koordinate und die erste und zweite Richtung im Wesentlichen parallel zur z-Koordinate. Dabei ist bevorzugt der erste Punkt in der Nähe von oder an einem längsseitigen Ende des Gegenstands vorgesehen und der zweite Punkt in der Nähe von oder an einem gegenüberliegenden längsseitigen Ende des Gegenstandsvorgesehen.

Offenbart ist ein Gegenstand mit mindestens einem ersten Sensor zum Messen mindestens einer ersten kinematischen Grundgröße und einer Prozessoreinheit, wobei der erste Sensor und die Prozessoreinheit dazu geeignet sind, das Verfahren wir oben beschrieben durchzuführen. Bevorzugt weist der Gegenstand ferner einen zweiten Sensor zum Messen mindestens einer zweiten kinematischen Grundgröße auf. Offenbart ist ferner ein Gegenstand mit einem Beschleunigungssensor und einer Prozessoreinheit, die dazu geeignet ist, aus der vom Beschleunigungssensor gemessenen Beschleunigung in einer ersten Richtung eine Koordinate des Auftreffpunkts eines Objekts auf die Oberfläche des Gegenstands zu ermitteln. Bevorzugt weist der Gegenstand ferner einen zweiten Beschleunigungssensor auf, wobei die Prozessoreinheit dazu geeignet ist, aus der von beiden Beschleunigungssensoren gemessenen Beschleunigung in jeweils einer Richtung zwei Koordinaten des Auftreffpunkts eines Objekts auf die Oberfläche des Gegenstands zu ermitteln.

Bevorzugt ist die Prozessoreinheit dazu geeignet, aus der vom Beschleunigungssensor gemessenen Beschleunigung in einer ersten Richtung zwei Koordinaten des Auftreffpunkts eines Objekts auf die Oberfläche des Gegenstands zu ermitteln. Bevorzugt weist der Gegenstand ferner ein Gyrometer auf, wobei die Prozessoreinheit dazu geeignet ist, aus der vom Gyrometer gemessenen Beschleunigung eine zweite Koordinate des Auftreffpunkts eines Objekts auf die Oberfläche des Gegenstands zu ermitteln.

Nachfolgend werden bevorzugte Ausführungsformen der vorliegenden Erfindung mit Bezug auf die Figuren näher beschrieben. Es zeigen:

Fig. 1a-c     das Messergebnis eines Experiments;

Fig. 2        ein Flussdiagramm für einen beispielhaften Algorithmus zur Bestimmung der y-Koordinate; und

Fig. 3        ein Flussdiagramm für einen beispielhaften Algorithmus zur Bestimmung der x-Koordinate.

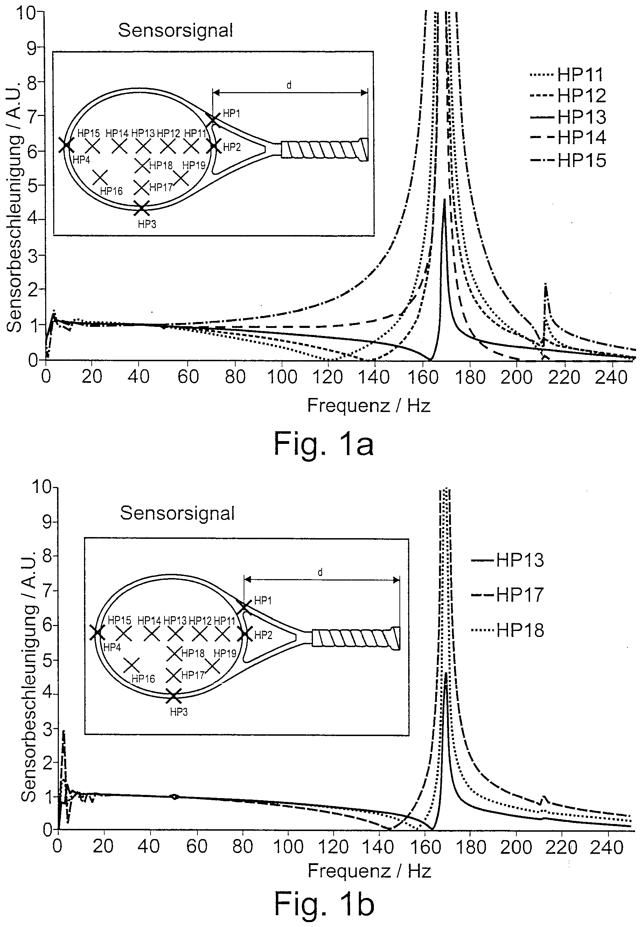

In den Figuren 1a bis 1c ist das Ergebnis eines Experiments dargestellt, anhand dessen beispielhaft erläutert werden soll, auf welchem Grundgedanken die vorliegende Erfindung beruht. Auch wenn sich die nachfolgende Beschreibung auf das Beispiel eines Tennisschlägers bezieht, so lässt sich das anhand dieses Beispiels erläuterte Verfahren grundsätzlich auf beliebige Objekte und Gegenstände anwenden.

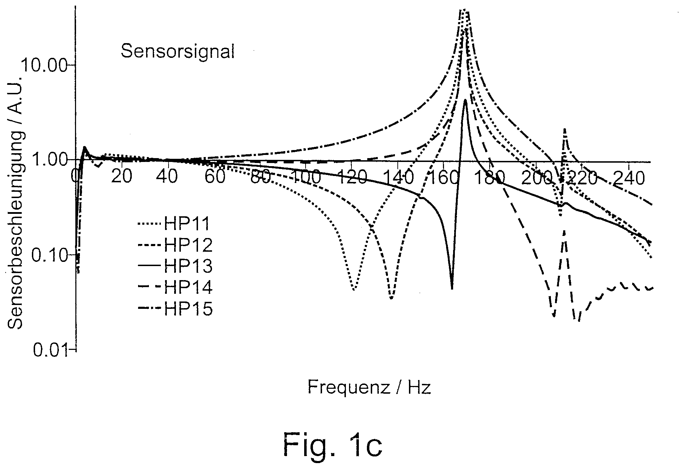

In der in den Figuren 1a und 1b eingeblendeten Skizze ist schematisch ein Tennisschläger (bei dem hier diskutierten Experiment wurde das Model "Extreme MP" von Head verwendet) abgebildet, an dessen Schlägerkopf zwei Sensoren angebracht sind, deren Positionen schematisch durch ein Kreuz sowie die Bezeichnugn HP1 und HP2 angedeutet sind. Bei den Sensoren handelt es sich um Beschleunigungssensoren des Typs "Bruel & Kjoer 4501". Die Bespannung des Tennisschlägers wurde an definierten Punkten mithilfe eines Hammers getroffen, wobei die Schlagkraft nicht relevant ist, da diese "herausnormiert" werden kann. Die Auftreffpunkte ("hitting points") des Hammers HP11 bis HP19 sind in der eingeblendeten Skizze in den Figuren 1a und 1b mithilfe von Kreuzen gekennzeichnet. Während des Aufpralls und im Anschluss daran wurde von den Sensoren an den Positionen HP1 und HP2 jeweils die Beschleunigung gemessen. Das Fourier-transformierte Signal des Sensors an der Position HP1 ist für die Auftreffpunkte HP11 bis HP15 in Figur 1a als Funktion der Frequenz dargestellt. Für die Auftreffpunkte HP13, HP17 und HP18 ist das entsprechende Signal in Fig. 1b dargestellt. Wie sich deutlich erkennen lässt, weichen die verschiedenen Kurven in Abhängigkeit des Auftreffpunkts deutlich in ihrer Form voneinander ab. So weisen beispielsweise alle Kurven ein Minimum auf, das in Abhängigkeit vom jeweiligen Auftreffpunkt bei deutlich unterschiedlichen Frequenzen auftritt. Im Falle einer logarithmischen Skalierung, wie sie für die Kurven der Fig. 1a in Fig. 1c abgebildet ist, sind diese Minima noch deutlicher ausgeprägt und es klar zu erkennen, wie sich das Minimum mit zunehmendem Abstand d des Auftreffpunkts vom Schlägergriff zu größeren Frequenzen verschiebt.

Die Idee der vorliegenden Erfindung basiert darauf, eine Korrelation zwischen der spezifischen Kurvenform im Frequenzraum und dem tatsächlichen Auftreffpunkt des Balls (d.h. des Objekts) auf der Bespannung (d.h. auf der Oberfläche des Gegenstands) zu erstellen. Ist eine solche Korrelation empirisch gelungen, lässt sich durch Messen der Beschleunigung und Transformation des Messsignals in den Frequenzraum auf einfache Weise der Auftreffpunkt des Balls bestimmen. Dies lässt sich in analoger Weise auf das Auftreffen beispielsweise eines Vogels auf dem Flügel eines Flugzeugs übertragen. Ist die typische Aufprallgeschwindigkeit und das typische Gewicht eines solchen Vogels bekannt, lässt sich empirisch eine Korrelation zwischen der spezifischen Kurvenform des Messsignals im Frequenzraum und dem tatsächlichen Auftreffpunkt des Vogels auf dem Flügel bestimmen.

Wie aus dem Beispiel der Figur 1 deutlich wird, lassen sich hierfür grundsätzlich verschiedene charakteristische Werte festlegen, auf Basis derer dann die Zuordnung erfolgen kann. So unterscheiden sich die Kurven in Figur 1 nicht nur durch die Position ihres Minimums voneinander, sondern beispielsweise auch durch ein unterschiedlich stark ausgeprägtes Maximum oder durch unterschiedliche Amplituden bei beispielsweise 120 Hz. Daher sei betont, dass die nachfolgend näher beschriebenen Ausführungsbeispiele spezifischer Algorithmen zur Bestimmung der x- und/oder y-Koordinate des Auftreffpunkts lediglich bevorzugte Ausführungsformen darstellen, die jedoch nicht limitierend zu verstehen sind. Vielmehr lassen sich auch andere Charakteristika der verschiedenen Kurven im Frequenzraum ermitteln, mithilfe derer auf die Position des Auftreffpunkts zurückgeschlossen werden kann.

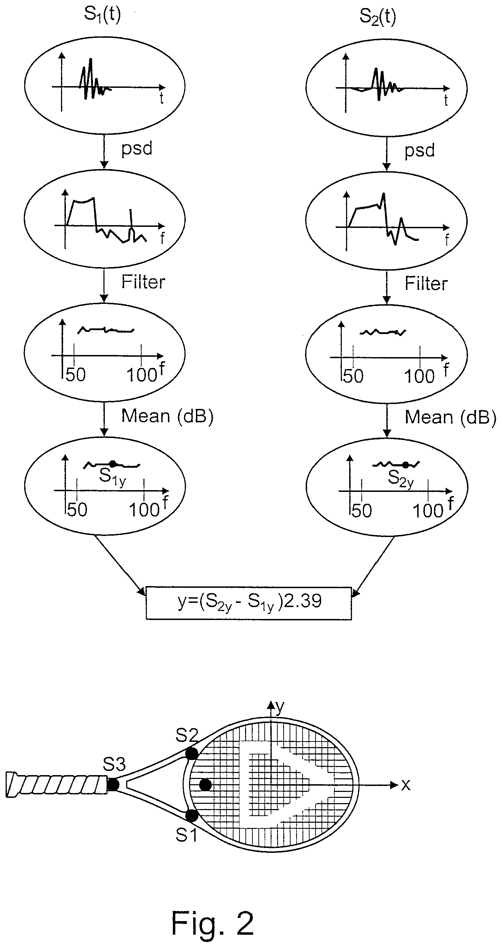

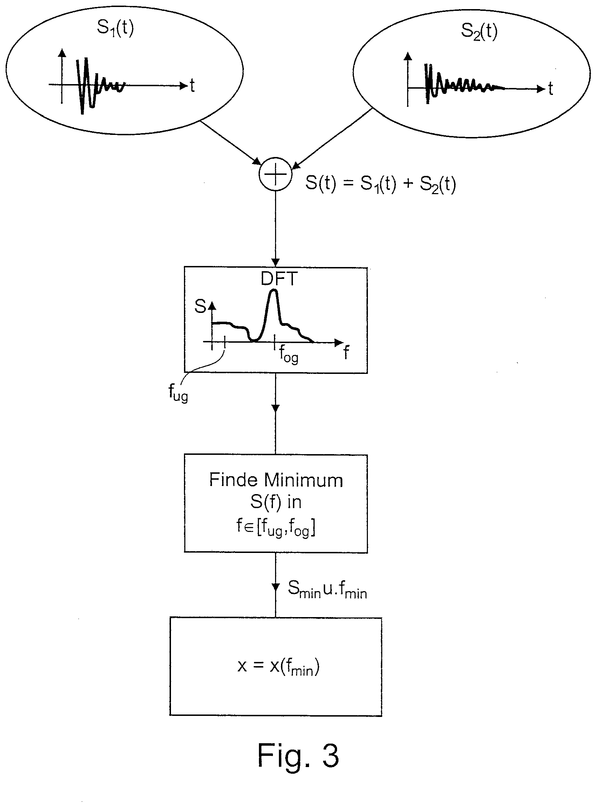

In den Figuren 2 und 3 ist ein spezielles Ausführungsbeispiel für ein erfindungsgemäßes Verfahren zur Bestimmung einer x-Koordinate sowie einer y-Koordinate dargestellt. In der eingeblendeten Skizze von Figur 2 ist schematisch ein Gegenstand mit einer Definition der x-bzw. y-Koordinate dargestellt, wobei der Ursprung des Koordinatensystems durch den Flächenschwerpunkt der Bespannung gebildet wird. An einer oder mehrerer der Positionen $S_1$, $S_2$ und $S_3$ kann sich jeweils ein Beschleunigungssensor befinden. Für das hier diskutierte Ausführungsbeispiel ist der Beschleunigungssensor $S_3$ jedoch nicht erforderlich. Es bedarf lediglich der beiden Beschleunigungssensoren $S_1$ und $S_2$, die bevorzugt an den beiden Armen bzw. jeweils am Übergang vom Arm zur Brücke angebracht sind. Bevorzugt messen die Beschleunigungssensoren $S_1$ und $S_2$ über einen Zeitraum von bevorzugt 2 s mit einer Messrate von bevorzugt 10.000 $s^{-1}$ die Beschleunigung entlang der z-Richtung, das heißt senkrecht zur x- und y-Koordinate. Das gemessene Signal der Beschleunigung als Funktion der Zeit der beiden Sensoren $S_1$ und $S_2$ ist in den Figuren 2 und 3 jeweils schematisch als $S_1(t)$ bzw. $S_2(t)$ dargestellt. Figur 2 enthält ein bevorzugtes Flussdiagramm zur Bestimmung der y-Koordinate, wohingegen Figur 3 ein bevorzugtes Flussdiagramm zur Bestimmung der x-Koordinate enthält.

Bei der in Figur 2 beispielhaft dargestellten Bestimmung der y-Koordinate wird zunächst die spektrale Leistungsdichte (psd) der gemessenen Signale $S_1(t)$ und $S_2(t)$ ermittelt. Mit anderen Worten erfolgt eine Transformation der gemessenen kinematischen Grundgröße in den Frequenzraum. Hierbei kann beispielsweise eine diskrete Fourier-Transformation wie zum Beispiel FFT (fast Fourier transformation) zum Einsatz kommen. Das transformierte Signal wird anschließend jeweils gefiltert. Die Filterung kann mithilfe bekannter Techniken wie zum Beispiel einem digitalen Bandpassfilter (z.B. Butterwerth-Filter dritter Ordnung) erfolgen. Anschließend wird bezogen auf ein charakteristisches Frequenzintervall jeweils ein charakteristischer Wert des transformierten Signals ermittelt. Im dargestellten Ausführungsbeispiel ist das charakteristische Frequenzintervall [50 Hz, 100 Hz] und der charakteristische Wert der Mittelwert der transformierten Funktion in diesem Frequenzintervall. Handelt es sich anstelle eines Tennisschlägers um beispielsweise einen Flugzeugflügel, kann das charakteristische Frequenzintervall bei deutlich niedrigeren Frequenzen liegen und zum Beispiel [0 Hz, 20 Hz] oder [5 Hz, 25 Hz] lauten. Werden die so bestimmten Mittelwerte der Sensoren $S_1$ und $S_2$ als $S_{1y}$ bzw. $S_{2y}$ bezeichnet, so lässt sich die y-Koordinate des Auftreffpunkts mithilfe der folgenden Formel bestimmen, wobei die Werte von $S_{1y}$ bzw. $S_{2y}$ in der Einheit $m/s^2$ einzugeben sind und das Resultat die y-Koordinate in cm angibt:

$$y = (S_{2y}\text{-}S_{1y})\,2.39$$

Diese Formel wurde heuristisch für einen bestimmten Tennisschläger ermittelt. Bei einem anderen Schlägertyp und insbesondere bei einem anderen Gegenstand oder Körper wie zum Beispiel einem Flugzeugflügel können die einzelnen Zahlenwerte der obigen Formel deutlich von dem hier diskutierten Ausführungsbeispiel abweichen. Ferner kann es, wie bereits erwähnt, bei einem anderen Gegenstand von Vorteil sein, ein anderes charakteristisches Frequenzintervall und/oder einen anderen charakteristischen Wert zu bestimmen.

In Figur 3 ist der korrespondierende Algorithmus zur beispielhaften Bestimmung der x-Koordinate in einem Flussdiagramm dargestellt. Bei dem vorliegenden Ausführungsbeispiel werden zunächst die beiden Messsignale $S_1(t)$ und $S_2(t)$ der Sensoren $S_1$ und $S_2$ addiert und das somit erhaltene Signal $S(t)$ mithilfe beispielsweise einer diskreten Fourier-Transformation (DFT) in eine spektrale Leistungsdichte $S(f)$ überführt. Anschließend wird eine obere Grenzfrequenz $f_{og}$ sowie eine untere Grenzfrequenz $f_{ug}$ des charakteristischen Frequenzintervalls $[f_{ug}, f_{og}]$ bestimmt. Bevorzugt ist das Intervall [10 Hz, 200 Hz]. Auf diesem charakteristischen Frequenzintervall wird dann das Minimum von S(f) und die zugehörige Frequenz $f_{min}$ ermittelt. Die x-Koordinate ist dann eine Funktion der zugehörigen Minimalfrequenz $f_{min}$: x = $x(f_{min})$. In einem bevorzugten Ausführungsbeispiel lässt sich die x-Koordinate des Auftreffpunkts mithilfe der folgenden Formel bestimmen, wobei die Frequenzwerte in der Einheit Hz anzugeben sind und das Resultat die x-Koordinate in cm angibt:

$$x = (f_{min} - 150)/5.7, \text{ falls } f_{min} < 170$$

$$x = (f_{min} - 210)/10, \text{ falls } f_{min} > 170$$

Alternativ kann die x-Koordinate auch eine Funktion der Minimalfrequenz sowie der beiden Frequenzen des charakteristischen Frequenzintervalls sein:

$$x = x(f_{min}, f_{ug}, f_{og})$$

Wie bereits mehrfach erläutert, handelt es sich bei diesen beiden Ausführungsbeispielen um spezielle Beispiele, die keinesfalls als limitierend angesehen werden sollten. Vielmehr soll mithilfe dieses Beispiels lediglich dargelegt werden, dass das Auffinden eines präzisen Algorithmus, der einer kinematischen Grundgröße im Frequenzraum eine Koordinate des Auftreffpunkts zuordnet, funktioniert. Grundsätzlich kann dieser Algorithmus jedoch in vielfacher Hinsicht abgewandelt werden und an die Geometrien und Schwingsungsverhalten unterschiedlichster Gegenstände empirisch angepasst werden. Die Kenntnis des spezifischen Schwingungsverhaltens eines bestimmten Gegenstands wird es dem Fachmann anhand des oben dargestellten Beispiels jedoch erlauben, ein zu diesem Schwingungsverhalten korrespondierendes charakteristisches Frequenzintervall sowie einen geeigneten charakteristischen Wert festzulegen. Das Ermitteln von Gleichungen entsprechend den oben für den Fall des Tennisschlägers dargestellten Gleichungen ist dem Fachmann dann durch einfache Experimente möglich.

**Patentansprüche**

1. Verfahren zur Bestimmung einer ersten und zweiten Koordinate des Auftreffpunktes eines Objekts auf der Oberfläche eines Gegenstands, wobei die Längsachse des Gegenstands eine x-Koordinate definiert, die Querachse des Gegenstands entlang seiner Breite eine y-Koordinate definiert und die Senkrechte zur x- und y-Koordinate eine z-Koordinate definiert, mit den folgenden Schritten:

a) Messen einer ersten kinematischen Grundgröße in einer ersten Richtung als Funktion der Zeit an einem ersten Punkt des Gegenstands;
b) Messen einer zweiten kinematischen Grundgröße in einer zweiten Richtung als Funktion der Zeit an einem zweiten Punkt des Gegenstands;
c) Transformation der gemessenen ersten kinematischen Grundgröße und der gemessenen zweiten kinematischen Grundgröße und/oder einer Linearkombination der gemessenen ersten und zweiten kinematischen Grundgröße in den Frequenzraum; und
d) Ermitteln der ersten und zweiten Koordinate des Auftreffpunkts auf der Basis der transformierten kinematischen Grundgröße(n) im Frequenzraum.

2. Verfahren nach Anspruch 1, wobei die erste Richtung im Wesentlichen mit der zweiten Richtung identisch ist.

3. Verfahren nach Anspruch 1 oder 2, wobei sich der erste Punkt von dem zweiten Punkt unterscheidet.

4. Verfahren nach einem der vorhergehenden Ansprüche, wobei das Ermitteln der ersten und/oder zweiten Koordinate des Auftreffpunkts auf der Basis der transformierten kinematischen Grundgröße(n) im Frequenzraum aufweist:

a) Bestimmen eines charakteristischen Frequenzintervalls;
b) Bestimmen mindestens eines charakteristischen Wertes der ersten und/oder zweiten kinematischen Grundgröße in Bezug auf das charakteristische Frequenzintervall; und
c) Ermitteln der ersten und/oder zweiten Koordinate des Auftreffpunkts auf der Basis des mindestens einen charakteristischen Wertes.

5. Verfahren nach Anspruch 4, wobei die Untergrenze des charakteristischen Frequenzintervalls zwischen 0 Hz und 100 Hz, bevorzugt zwischen 5 Hz und 80 Hz und besonders bevorzugt zwischen 10 Hz und 50 Hz liegt.

6. Verfahren nach Anspruch 4 oder 5, wobei die Obergrenze des charakteristischen Frequenzintervalls zwischen 20 Hz und 500 Hz, bevorzugt zwischen 25 Hz und 400 Hz und besonders bevorzugt zwischen 30 Hz und 300 Hz liegt.

7. Verfahren nach einem der Ansprüche 4-6, wobei der charakteristische Wert einen oder eine Kombination der folgenden Werte aufweist: lokales oder absolutes Minimum der ersten und/oder zweiten kinematischen Grundgröße im charakteristischen Frequenzintervall, lokales oder absolutes Maximum der ersten und/oder zweiten kinematischen Grundgröße im charakteristischen Frequenzintervall, Mittelwert der ersten und/oder zweiten kinematischen Grundgröße im charakteristischen Frequenzintervall, Mittelwert der ersten und/oder zweiten kinematischen Grundgröße in einem Teilintervall des charakteristischen Frequenzintervalls.

**8.** Verfahren nach einem der Ansprüche 4-7, wobei die erste und/oder zweite Koordinate eine Funktion des charakteristischen Wertes ist.

**9.** Verfahren nach einem der vorhergehenden Ansprüche, wobei die erste und/oder zweite kinematische Grundgröße die Beschleunigung ist.

**Claims**

**1.** A method for determining a first and a second coordinate of the hitting point of an object on the surface of an article, wherein the longitudinal axis of the article defines an x-coordinate, the transverse axis of the article along its width defines a y-coordinate and the perpendicular to the x-coordinate and the y-coordinate defines a z-coordinate, comprising the following steps:

(a) measuring a first kinematic variable in a first direction at a first point of the article as a function of time;
(b) measuring a second kinematic variable in a second direction at a second point of the article as a function of time;
(c) transforming the measured first kinematic variable and the measured second kinematic variable and/or a linear combination of the measured first and second kinematic variables into the frequency space; and
(d) determining the first and second coordinates of the hitting point on the basis of the transformed kinematic variable(s) in the frequency space.

**2.** The method according to claim 1, wherein the first direction is substantially identical to the second direction.

**3.** The method according to claim 1 or 2, wherein the first point differs from the second point.

**4.** The method according to any one of the preceding claims, wherein the determination of the first and/or the second coordinate of the hitting point on the basis of the transformed kinematic variable(s) in the frequency space comprises:

(a) determining a characteristic frequency interval;
(b) determining at least one characteristic value of the first and/or the second kinematic variable with respect to the characteristic frequency interval; and
(c) determining the first and/or the second coordinate of the hitting point on the basis of the at least one characteristic value.

**5.** The method according to claim 4, wherein the lower limit of the characteristic frequency interval is between 0 Hz and 100 Hz, preferably between 5 Hz and 80 Hz and most preferably between 10 Hz and 50 Hz.

**6.** The method according to claim 4 or 5, wherein the upper limit of the characteristic frequency interval is between 20 Hz and 500 Hz, preferably between 25 Hz and 400 Hz and most preferably between 30 Hz and 300 Hz.

**7.** The method according to any one of claims 4-6, wherein the characteristic value comprises one or a combination of the following values: local or absolute minimum of the first and/or the second kinematic variable in the characteristic frequency interval, local or absolute maximum of the first and/or the second kinematic variable in the characteristic frequency interval, mean value of the first and/or the second kinematic variable in the characteristic frequency interval, mean value of the first and/or the second kinematic variable in a partial interval of the characteristic frequency interval.

**8.** The method according to any one of claims 4-7, wherein the first and/or the second coordinate is a function of the characteristic value.

**9.** The method according to any one of the preceding claims, wherein the first and/or the second kinematic variable is the acceleration.

**Revendications**

**1.** Procédé de détermination d'une première et seconde coordonnée du point d'impact d'un objet sur la surface d'un élément, dans lequel l'axe longitudinal de l'élément définit une coordonnée x, l'axe transversal de l'élément définit une coordonnée y le long de sa largeur et la perpendiculaire à la coordonnée x et y définit une coordonnée z, avec les étapes suivantes :

a) mesure d'une première grandeur de base cinématique dans une première direction en tant que fonction du temps en un premier point de l'élément ;

b) mesure d'une seconde grandeur de base cinématique dans une seconde direction en tant que fonction du temps en un second point de l'élément ;

c) transformation de la première grandeur de base cinématique mesurée et de la seconde grandeur de base cinématique mesurée et/ou d'une combinaison linéaire de la première et seconde grandeur de base cinématique mesurée dans l'espace fréquentiel ; et

d) détermination de la première et seconde coordonnée du point d'impact sur la base de la/des grandeur(s) de base cinématique(s) transformée(s) dans l'espace fréquentiel.

2. Procédé selon la revendication 1, dans lequel la première direction est essentiellement identique à la seconde direction.

3. Procédé selon la revendication 1 ou 2, dans lequel le premier point se différencie du second point.

4. Procédé selon l'une des revendications précédentes, dans lequel la détermination de la première et/ou seconde coordonnée du point d'impact sur la base de la/des grandeur(s) de base cinématique(s) transformée(s) dans l'espace fréquentiel présente :

a) la détermination d'un intervalle fréquentiel caractéristique ;

b) la détermination d'au moins une valeur caractéristique de la première et/ou seconde grandeur de base cinématique s'agissant de l'intervalle fréquentiel caractéristique ; et

c) la détermination de la première et/ou seconde coordonnée du point d'impact sur la base de la au moins une valeur caractéristique.

5. Procédé selon la revendication 4, dans lequel la limite inférieure de l'intervalle fréquentiel caractéristique se situe entre 0 Hz et 100 Hz, de préférence entre 5 Hz et 80 Hz, et particulièrement de préférence entre 10 Hz et 50 Hz.

6. Procédé selon la revendication 4 ou 5, dans lequel la limite supérieure de l'intervalle fréquentiel caractéristique se situe entre 20 Hz et 500 Hz, de préférence entre 25 Hz et 400 Hz, et particulièrement de préférence entre 30 Hz et 300 Hz.

7. Procédé selon l'une des revendications 4-6, dans lequel la valeur caractéristique présente une ou une combinaison des valeurs suivantes : minimum local ou absolu de la première et/ou seconde grandeur de base cinématique dans l'intervalle fréquentiel caractéristique, maximum local ou absolu de la première et/ou seconde grandeur de base cinématique dans l'intervalle fréquentiel caractéristique, valeur moyenne de la première et/ou seconde grandeur de base cinématique dans l'intervalle fréquentiel caractéristique, valeur moyenne de la première et/ou seconde grandeur de base cinématique dans un sous-intervalle de l'intervalle fréquentiel caractéristique.

8. Procédé selon l'une des revendications 4-7, dans lequel la première et/ou seconde coordonnée est une fonction de la valeur caractéristique.

9. Procédé selon l'une des revendications précédentes, dans lequel la première et/ou seconde grandeur de base cinématique est l'accélération.

Fig. 1a

Fig. 1b

Fig. 1c

$S_1(t)$ $S_2(t)$

psd psd

Filter Filter

50 100 f 50 100 f

Mean (dB) Mean (dB)

$S_{1y}$ $S_{2y}$

50 100 f 50 100 f

$$y=(S_{2y} - S_{1y})2.39$$

S2

S3

x

S1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19816389 A1
- DE 2942533 A1
- US 4101132 A
- US 4257594 A
- EP 0377614 B1
- WO 2013069447 A1
- US 2005239583 A1
- US 2007105664 A1
- US 2013053190 A1
- US 5757266 A